# EUROPÄISCHE PATENTANMELDUNG

(11) **EP 3 029 312 A1**
(43) Veröffentlichungstag der Anmeldung: **08.06.2016**
(21) Anmeldenummer: 14460096.2
(22) Anmeldetag: 02.12.2014
(51) Int. Cl.: F03B 17/06

(54) **AUFGEHÄNGTE WASSERKRAFTANLAGE**

(71) Anmelder: Drozdowski, Feliks Leonard, 81-388 Gdynia (PL)
(72) Erfinder: Drozdowski, Feliks Leonard, 81-388 Gdynia (PL)

(57) **Zusammenfassung**

Gegenstand der Erfindung ist ein aufgehängtes Wasserkraftwerk über fließendem Wasser, welches unter eine Brücke gehängt ist, aufweisend eine Wasserkammer (1), welche sich langsam nach oben verengt, und wobei das Wasserrad mit einem Stromgenerator verbunden ist. Das Wasserrad (3) befindet sich über dem Wasserstand des fließenden Wassers. Vor dem Wasserrad ist eine Düse (2) für eine Einspritzung wie bei einer Pelton-Turbine. Hinter dem Wasserrad ist eine Flosse (4) die Wasserleere verursacht.

## Beschreibung

Gegenstande Erfindung ist Gehängte Wasserkraftwerk, näher Kraftwerk über fließende Wasser gehängt.

Bekannte Wasserkraftwerk wie enthülte Ausweisstuck EP 1731757, Wasserrad ist versinken in fließende Wasser. Aber solche ausführen begrenzte Leistung bis 80%. Über das mußte mann bauen kostlische Staudemme, von wo Mächtigkeit kommt aus Gravitations die Wasser.

Das Wesen Erfindung ist Kraftwerk unter Brücke gehängt, mit untere Teil in Wesser versinkt, ausrüsten mit Kammer wo es sich verangern, ist mit Wasserrad und Stromgenerator verbinden. Wasserrad befinde sich über Stand die fließendes Wasser, dagegen an die ende Rad ist eine Flosse da wasserleere Raum versichern. Am ende Wasserkammer vor Wasserrad ist eine Düse welche Strom die Wasser reguliert.

Vorteil der Stromgenerator, zufolge die Erfindung ist nicht nur Sonder auch so, daß Wasser auf die Wasserrad als Strom fallen ist, ebenso wie zum beispiel Spritz Turbine Peltona welche über 90% Leistungen haben.

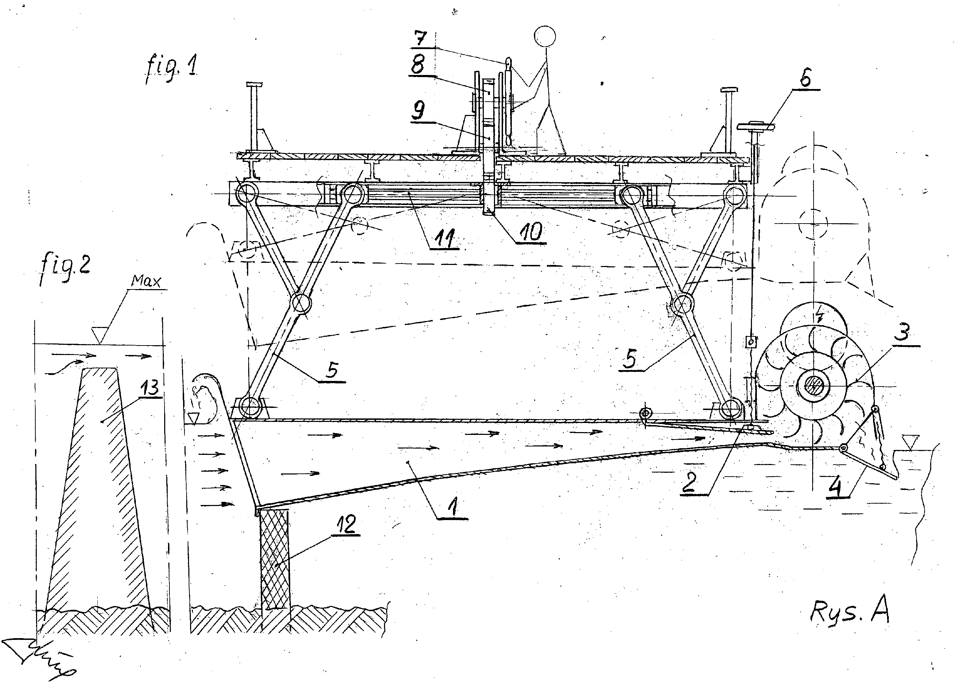

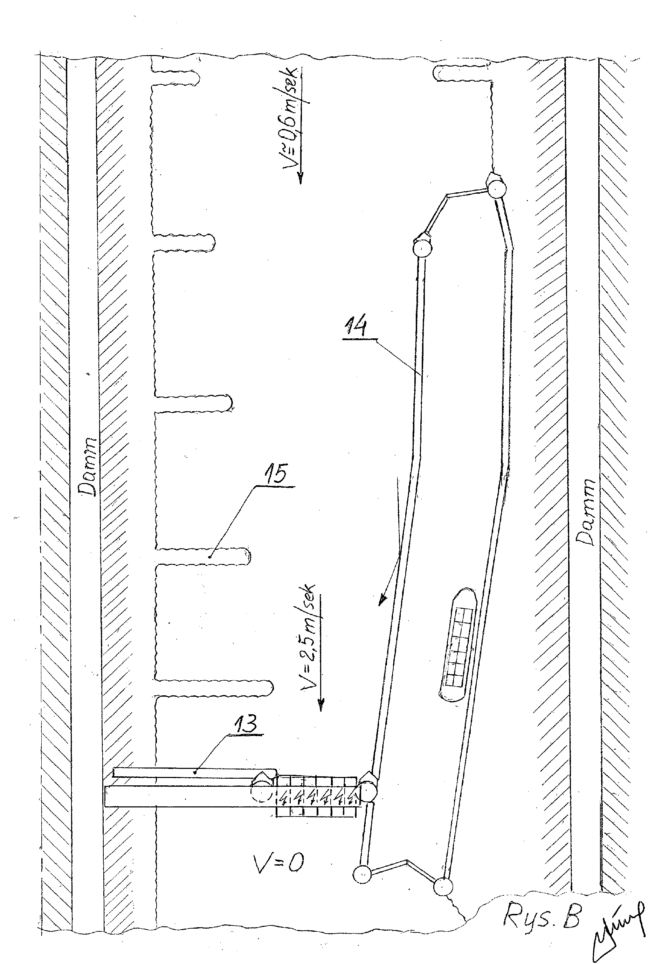

Gegenständliche Erfindung auf Zeichnung Rys. A fig.1 vorzeigen ist. Zusammenstellung ist: Kammer 1 mit Boden langsam zum hoh zuschritten und verangern sich, beendet mit Düse 2 und Wasserade 3. Ales ist unter Brücke gehängt mit zwei Schere Mechanismus 5. Wasserfluß durch Düse 2 Regulieren ist mit Knabelgriffe 6 aus Brücke. Mit Knebelgriffe 6 darf man auch Wasser Strom anhalten und Wasserrad 3 stillegen. Schere Mechanismus 5 dient zum Kraftwerk damit auf die Wasser langsam herunterlassen kann, so das die Wasserrad 3 knapp auf die Spigiel das Wasser sei. Langsame herunterlassen volbringen mit Rad 7 handlisch verdrehen. Rad 7 ist verbinden achslich mit Zahnrad 8, Mittelzahne 9 und Zahnrad 10 welche achse ist romische Schraube 11.

Als Beispiel Realisierung die Erfindung ist Bild Rys. A fig.1: Kraftwerk unter Brücke über Fluße gehängt, kann über, Stand der Wasser seina hohe verandern. In extremale Fall wenn auf die Fluße Eisschole schwimmen werden, Kraftwerk wird hochheben und ausschalten.

### Verwendung die Erfindung

Kraftwerk tätig sein infolge kinetische Kraft flach fließende Wasser. Zum angenäher die Kraftabrechnung nehmen ist Vindkraftmuster (Anlage). Am höchstens Parametr die Krafte ist Strömungsgeschwindigkeit V³. Auf Europälische Fluße Rinnem mit V gegen 0,6 m/s. Deshalb zum vorschlag kommen ist Einengung Strombette zubauen, vor dem Wasserkraftwerke durch verlangen Buhne 15. Strömungsgeschwindigkeit kann jedoch 2,5 m/s nich übertreten, deshalb Lastbarke schwimen gegen 3 m/s. Die Wasser in Fluße im ganze Jahre ist immer wenig, deshalb soll man bauen Quer die Flüße Sperre, am beste als Wand Lasera 12. Bei nidrige Wasserstande manche Turbine werden abschalten mit Knebelgriffe 6, dann die Wasser wird geflußen zum dem andere weit arbaiten. Bei überfluße wird Kraftwerk so aufheben wie es möglisch, damit sie Kraftlisch Ausnutzen. Bei großen überfluße Kraftwerk wird ganz Hoh stellen, dann die Wasser vergießen sich über Sperrmauer 13, so sie schützten ganze Kraftwerke vor dem Vernichtung. Auf dem Bild Rys. B gezeigt ist beispiel Realisierung Schleusen mit Wand Lasera 14. Günstig von Realisierung die Erfindung ist Zuname Wasser in Strombett, dafür da die herabfallene Wasser nach die Wasserrade haben Strömungsgeschwindigkeit nur "0". Die kinetische Energie die Wasser tauschen sich auf Elektrische Energie. Erst von neu flüsende Wasser und zu folge die Neigung die Gelände wird Wasser weit Flüßen. Wen die Schwindigkeit ereicht erste Stand, kann man nachstehende Kaskade bauen.

Wasserzuname im Strombett verbessern möglischkeite Schiffahrte mit Lastbarke.

Wasserzuname im Strombett auch Fischbestand verbessern kann, besonder für Lachse, da sie sich einbiegen, wegen untiefe und sich erwärmen im Sommer über 21°.
Verwendung die Erfindung in Polen sehe ich haptsachlisch auf die Wisla, hier gebaute kostlische Steudamme Wloclawek erschafte viele probleme. Auf die Welt ist viele ähnliche Fluße. In erste Reihe solte man ausnutzen die schnell fließende Fluße.

## Patentansprüche

1. Gehängte Wasserkraftwerk unter Brücke gesetzt und getau im Stromlauf, ausrüsten mit Wasserkammer wo es sich langsam zum hoh verangern, so wie Wasserrad mit Stromgenerator verbinden, bezeichnend ist, daß Wasserrad (3) befinde sich über Stand fließendes Wasser, dagegen an die ende Wasserrad ist Flosse (4) einbauen.

2. Gehängte Wasserkraftwerk zufolge Vorbehalte 1, bezeichnend ist, daß am ende Wasserkammer (1) vor Wasserrad (3) ist ausrüsten mit schließende Düse (2).

## Geänderte Patentansprüche

### Geänderte Patentansprüche gemäss Regel 137(2) EPÜ.

1. Gehängte Wasserkraftwerk unter Brücke gesetzt und versinken im Stromlauf, ausrüsten mit Wasserkammer welche sich langsam nach oben verengt, so wie Wasserrad mit Stromgenerator verbinden, bezeichnend ist, daß Wasserrad (3) ist über Stand fließendes Wasser, dagegen an die ende Wasserrad ist Flosse (4) einbauen.

2. Gehängte Wasserkraftwerk zufolge Vorbehalte 1, bezeichnend ist, daß am ende Wasserkammer (1) vor Wasserrad (3) ist ausrüsten mit schließende Düse (2).

3. Gehängte Wasserkraftwerk zufolge Vorbehalte 1, bezeichnend ist, daß Wasserkraftwerk mit einem mechanismus (5) kann nach aben gehoben und Eischolle durchschwimmen lassen.
